# EUROPÄISCHE PATENTSCHRIFT

(11) **EP 2 004 445 B1**
(45) Veröffentlichungstag und Bekanntmachung des Hinweises auf die Patenterteilung: **14.09.2011**
(21) Anmeldenummer: 07727264.9
(22) Anmeldetag: 23.03.2007
(51) Int. Cl.: B60K 31/00, B60T 7/22

(54) **ANPASSUNG EINES BREMSASSISTENTEN BEI EINER FAHRERBREMSUNG**
ADAPTING BRAKING ASSISTANCE DURING VEHICLE BRAKING
ADAPTATION D'UN SYSTÈME D'ASSISTANCE AU FREINAGE AU COURS D'UN FREINAGE RÉALISÉ PAR LE CONDUCTEUR

(30) Priorität: 03.04.2006 DE 102006015491
(43) Veröffentlichungstag der Anmeldung: 24.12.2008
(73) Patentinhaber: Robert Bosch GmbH, 70442 Stuttgart (DE)
(72) Erfinder: MARINOV, Svetoslav, 76131 Karlsruhe (DE)
(86) Internationale Anmeldenummer: PCT/EP2007/052790
(87) Internationale Veröffentlichungsnummer: WO 2007/113132

(56) Entgegenhaltungen:
- EP-A- 1 083 075
- EP-A2- 0 867 349
- DE-A1- 10 360 777
- DE-A1-102004 019 164

## Beschreibung

### Stand der Technik

Die Erfindung betrifft ein Verfahren zum automatischen Bremsen eines Fahrzeuges gemäß dem Oberbegriff des Patentanspruches 1, sowie ein Steuergerät mit einem Bremsassistenz-Algorithmus gemäß dem Oberbegriff des Patentanspruchs 8.

Bremsassistenz-Systeme, auf die hier Bezug genommen wird, dienen dazu, den Fahrer beim Bremsen seines Fahrzeuges zu unterstützen, indem sie das Fahrzeug automatisch abbremsen, ohne dass der Fahrer hierzu das Bremspedal betätigen müsste. Derartige Bremsassistenten werden auch als ACC (Adaptive Cruise Control) bezeichnet. Die zugehörige Bremsassistenz-Funktion ist üblicherweise als Software in einem Steuergerät hinterlegt. Bei Anwendung in einem Stop & Go System sorgt die Bremsassistenz-Funktion dafür, dass das Fahrzeug z. B. an einem Stau-Ende oder einer Ampel rechtzeitig abgebremst wird, wenn es sich einem vorausfahrenden Fahrzeug nähert.

Bekannte Bremsassistenz-Systeme wie Z.B. in DE 10 2004 019164 A1 beschrieben, umfassen üblicherweise eine Radarsensorik, mit der das Umfeld des Fahrzeuges überwacht wird. Die Sensorsignale werden von einem Steuergerät ausgewertet, das im Falle eines nahenden Hindernisses einen Bremsaktuator, wie z.B. eine Hydraulikpumpe, ansteuert, um das Fahrzeug automatisch zu verzögern. Der Bremsvorgang erfolgt üblicherweise geregelt, wobei üblicherweise der Bremsdruck auf einen vom Steuergerät vorgegebenen Solldruck geregelt wird.

Bekannte Bremsassistenz-Systeme sind meist derart ausgelegt, dass die ACC-Regelung beendet wird, wenn der Fahrer das Fuß-Bremspedal betätigt. Die Bremswirkung wird dann i. d. R. linear heruntergefahren, wobei der Regler-Solldruck über eine Rampe gegen den Wert Null geführt wird. Dadurch erhält der Fahrer nach einer gewissen Abklingzeit die Kontrolle über das Fahrzeug zurück.

Bei einer an die Situation angepassten, d.h. ausreichend starken Bremsung des Fahrers wird das Fahrzeug auch nach dem Deaktivieren der ACC-Regelung weiterhin angemessen verzögert. Betätigt der Fahrer das Fuß-Bremspedal jedoch mit zu geringer Kraft, wird die ursprünglich hohe Verzögerung der ACC-Regelung nahezu sprungartig unterbrochen und das Fahrzeug nur noch mit der geringeren Fahrervorgabe gebremst. Dies führt dazu, dass das Fahrzeug relativ beschleunigt und die Gefahr eines Auffahrunfalls zunimmt. Besonders kritisch ist die Unterbrechung der ACC-Regelung, wenn der Fahrer das Fuß-Bremspedal nur antippt oder versehentlich berührt.

### Offenbarung der Erfindung

Es ist daher die Aufgabe der vorliegenden Erfindung, die Sicherheit von Bremsassistenzsystemen zu verbessern, insbesondere wenn der Fahrer das Fuß-Bremspedal während einer ACC-Regelung nur leicht berührt.

Gelöst wird diese Aufgabe gemäß der Erfindung durch die im Patentanspruch 1 sowie im Patentanspruch 9 angegebenen Merkmale. Weitere Ausgestaltungen der Erfindung sind Gegenstand von Unteransprüchen.

Ein wesentlicher Gedanke der Erfindung besteht darin, eine bereits aktive Bremsregelung basierend auf einem festen Sollwert fortzusetzen, auch wenn der Fahrer das Fuß-Bremspedal betätigt, und zwar so lange, bis der Fahrer seinen Bremswunsch reduziert. Die Regelung wird also - anders als im Stand der Technik - nicht bereits durch Betätigen (Drücken) des Bremspedals unterbrochen, sondern erst dann beendet, wenn ein negativer Gradient der Fahrervorgabe erkannt wurde. Dies hat den wesentlichen Vorteil, dass das Fahrzeug weiterhin konstant abgebremst wird und insbesondere nicht beschleunigt, wenn der Fahrer das Fuß-Bremspedal nur leicht betätigt.

Gemäß einer bevorzugten Ausführungsform der Erfindung wird der Regler-Sollwert auf dem zu Beginn der Pedalbetätigung vorliegenden Wert quasi "eingefroren". Dieser Sollwert wird dann solange beibehalten, bis der Fahrer das Bremspedal wieder löst.

Im Folgenden wird zwischen zwei Fällen der Bremsbetätigung unterschieden: 1. Der Fahrer bremst relativ schwach, wobei der vom Fahrer vorgegebene Bremsdruck geringer ist als der Soll-Bremsdruck des Reglers. Und 2., der Fahrer bremst relativ stark, wobei der vom Fahrer vorgegebene Bremsdruck größer ist als der Soll-Bremsdruck des Reglers. Im ersten Fall wird, wie vorstehend erwähnt, die Bremsregelung kontinuierlich fortgesetzt. Im zweiten Fall wird die Regelung vorzugsweise deaktiviert und der Fahrer übernimmt alleine die Kontrolle über das Fahrzeug.

Der Fahrerwunsch kann mittels jeder geeigneten Sensorik, wie z.B. eines Pedalwertgebers (z.B. einem Kraft- oder Wegsensor) oder eines Drucksensors gemessen werden. Bei Fahrzeugen mit einem so genannten Vordrucksensor wird vorzugsweise dieser zur Überwachung des Fuß-Bremspedals herangezogen.

Die Regelgröße der Bremsregelung ist vorzugsweise der Rad-Bremsdruck. Alternativ könnte aber auch jede andere, die Fahrzeugverzögerung beschreibende Größe, wie z.B. die Bremskraft, das Bremsmoment oder die Verzögerung selbst geregelt werden.

Die erfindungsgemäße Bremsregelung ist vorzugsweise derart ausgelegt, dass der Sollwert auf die Fahrervorgabe gesenkt wird, sobald der Fahrer das Fuß-Bremspedal löst. Die Reduktion des Sollwertes erfolgt vorzugsweise nicht sprungartig, sondern gemäß einer vorgegebenen Überblend-Funktion, um die Verzögerung des Fahrzeuges nicht abrupt zu unterbrechen. Gemäß einer bevorzugten Ausführungsform der Erfindung wird der Sollwert gemäß einem PT₁-Verhalten reduziert. Dabei wird die Differenz zwischen dem aktuellen Sollwert und dem Start-Sollwert (der Sollwert vor Erkennung eines fallenden Gradienten der Fahrervorgabe) ausgewertet und diese Differenz in jedem Programmzyklus mit einer vorgegebenen Integrationskonstante multipliziert. Sobald der Sollwert der Fahrervorgabe entspricht, übernimmt der Fahrer wieder die Kontrolle über das Fahrzeug.

Der Regler-Sollwert wird außerdem so schnell reduziert, dass er den Wert der Fahrervorgabe erreicht, noch bevor der Fahrer den Bremsdruck vollständig reduziert hat. Dadurch wird verhindert, dass das Fahrzeug vom Regler weiter gebremst wird, selbst wenn der Fahrer den Fuß bereits vollständig vom Bremspedal genommen hat. Dieser Effekt wird auch als "Kleben" der Bremse bezeichnet und kann durch die vorgenannte Auslegung der Regelung vermieden werden.

Bei der vorstehend beschriebenen ACC-Regelung würde der Regelvorgang auch dann beendet werden, wenn der Fahrer das Fuß-Bremspedal nur kurzfristig antippt oder versehentlich berührt. Dies hätte zur Folge, dass die Bremswirkung schlagartig unterbrochen werden und das Fahrzeug ungebremst weiter rollen würde. Um dies zu verhindern, umfasst die ACC-Regelung vorzugsweise eine weitere Sicherheitsfunktion. Gemäß der Erfindung wird vorzugsweise eine Zeitschwelle eingeführt, die eine Mindestdauer für die Betätigung des Bremspedals definiert. Wird das Fuß-Bremspedal kürzer betätigt als die vorgegebene Zeitschwelle von z.B. 1 s, wird die Regelung nicht abgebrochen, wenn der Fahrer das Bremspedal löst. Betätigt der Fahrer das Pedal dagegen länger als die Zeitschwelle, wird die Regelung, wie vorstehend beschrieben, beendet. Die vorgegebene Zeitschwelle kann auch mehrere Sekunden betragen.

Ein erfindungsgemäßes Bremsassistenz-System umfasst im Wesentlichen ein Steuergerät mit einer entsprechenden Bremsassistenz-Funktion zum automatischen Bremsen eines Fahrzeugs. Das Steuergerät verarbeitet verschiedene, den Fahrzustand betreffende Größen, wie z.B. die Signale einer Umfeldsensorik, sowie Signale eines Pedalwertgebers, Geschwindigkeits-Messwerte und gegebenenfalls weitere Größen. Die Bremsassistenzfunktion ist dabei, wie vorstehend beschrieben, ausgelegt.

### Kurze Beschreibung der Zeichnungen

Die Erfindung wird nachstehend anhand der beigefügten Zeichnungen beispielhaft näher erläutert. Es zeigen:
- Figur 1: eine schematische Blockdarstellung eines Bremsassistenzsystems mit Bremsdauer abhängiger Bremsregelung;
- Figur 2: den zeitlichen Verlauf des Solldrucks während einer Bremsregelung bei relativ langer Bremsbetätigung durch den Fahrer; und
- Figur 3: den Verlauf des Solldrucks während einer Bremsregelung bei kurzer Bremsbetätigung durch den Fahrer.

### Ausführungsformen der Erfindung

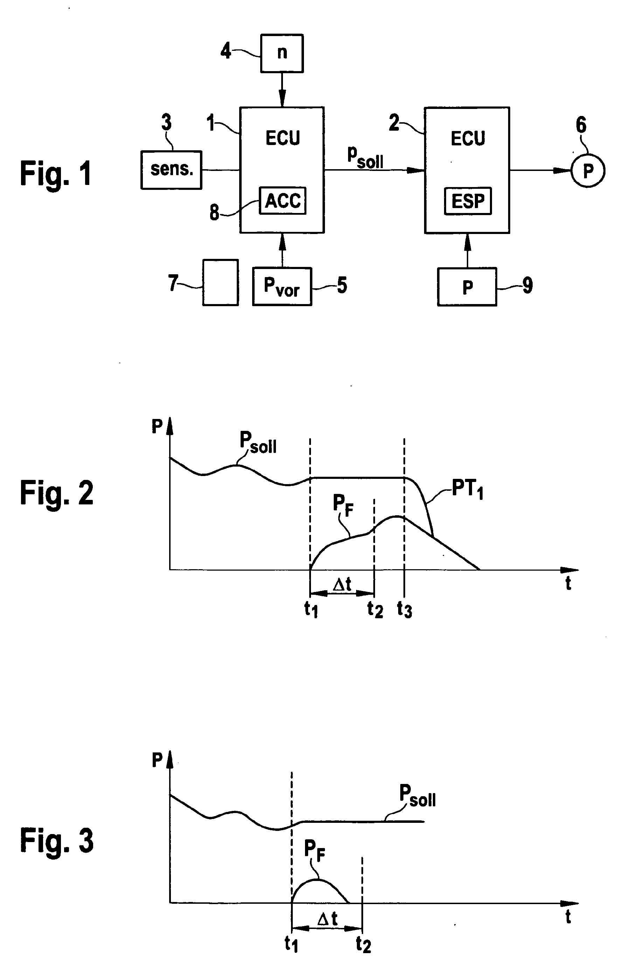

Figur 1 zeigt eine schematische Blockdarstellung eines Bremsassistenzsystems, das im Wesentlichen ein Bremsassistenz-Steuergerät 1 (ACC-Steuergerät) und ein Fahrdynamikregelungs-Steuergerät 2 (ESP-Steuergerät) umfasst. Das ACC-Steuergerät 1 enthält die eigentliche Bremsassistenz-Funktion 8 (ACC), die eine automatische Bremsung auslöst, wenn sich das Fahrzeug einem Hindernis nähert.

Eine Umfeldsensorik 3, deren Signale vom Steuergerät 1 verarbeitet werden, dient zur Überwachung der Umgebung des Fahrzeuges in Bezug auf mögliche Hindernisse. Bei der Umfeldsensorik 3 kann es sich z.B. um Radarsensoren oder auch um ein Videoüberwachungssystem handeln.

Das Steuergerät 1 liest ferner die Signale von Rad-Drehzahlsensoren 4 und berechnet daraus die Fahrzeuggeschwindigkeit. Die Betätigung des Fuß-Bremspedals 7 wird mittels eines Vordrucksensors 5 überwacht, der den Bremsdruck vor (so genannter Vordruck) in der hydraulischen Bremsanlage misst. Gegebenenfalls können noch weitere Größen berücksichtigt werden.

Die Bremsassistenz-Funktion 8 arbeitet im wesentlichen wie folgt: wenn sich das Fahrzeug im Stop &-Go Betrieb einem vorausfahrenden Fahrzeug annähert und der Abstand zum vorausfahrenden Fahrzeug einen bestimmten Wert unterschreitet, erzeugt die Bremsassistenz-Funktion 8 einen Sollwert, hier einen Solldruck pₛₒₗₗ, der mittels eines Reglers eingeregelt wird. (Die Regel-Funktion ist im Steuergerät 2 integriert, könnte aber natürlich auch im ACC-Steuergerät 1 mit enthalten sein). Der Sollwert pₛₒₗₗ ist insbesondere abhängig von der aktuellen Geschwindigkeit des Fahrzeugs, dem Abstand zum Hindernis und gegebenenfalls weiteren Größen.

Der Sollwert pₛₒₗₗ wird an das ESP-Steuergerät 2 übertragen, das daraufhin eine Solldruck-Regelung durchführt. Hierzu wird eine Hydraulikpumpe 6 angesteuert, mittels der der Raddruck p auf den Sollwert geregelt wird. Der aktuelle Istwert wird mittels Raddruck-Sensoren 9 gemessen und in das ESP-Steuergerät 2 zurückgeführt.

Die ACC-Regelung wird beendet, nachdem der Fahrer das Bremspedal 7 betätigt hat und den Bremsdruck wieder reduziert (also ein negativer Gradient des Bremsdrucks vorliegt). Das Ende der ACC-Regelung ist außerdem davon abhängig, wie lange der Fahrer das Fuß-Bremspedal 7 betätigt. Dies wird im Folgenden anhand der Figuren 2 und 3 beispielhaft näher erläutert.

Figur 2 zeigt den Regelverlauf einer ACC-Regelung für den Fall, dass der Fahrer das Fuß-Bremspedal 7 länger als eine vorgegebene Mindest-Zeitdauer Δt betätigt und danach den Bremsdruck wieder löst. Der vom ACC-Steuergerät 1 erzeugte Solldruck ist mit pₛₒₗₗ und der vom Fahrer erzeugte Druck mit p_{F} bezeichnet. Wie an der Kurve pₛₒₗₗ zu erkennen ist, bewegt sich der Solldruck zu Beginn der Regelung auf einem hohen Niveau. Ab dem Zeitpunkt t₁ beginnt der Fahrer, die Betriebsbremse zu betätigen. Dies wird vom ACC-Steuergerät 1 bzw. vom Vordrucksensor 5 erkannt. Der Solldruck pₛₒₗₗ wird daraufhin vom Regler auf demjenigen Wert festgehalten, der zum Zeitpunkt t₁ vorlag. Dieser Wert wird im Folgenden so lange beibehalten, bis der Fahrer die Bremskraft wieder reduziert.

Wie an der Fahrervorgabe p_{F} zu erkennen ist, löst der Fahrer das Bremspedal etwa ab dem Zeitpunkt t₃ wieder und nimmt danach den Fuß völlig von der Bremse 7. Sobald das Steuergerät 1 einen negativen Gradienten der Pedalbetätigung p_{F} erkennt, reduziert die Bremsassistenz-Funktion 8 den Solldruck pₛₒₗₗ bis auf die Fahrervorgabe p_{F}. Diese Rückführung des Sollwerts erfolgt vorzugsweise nicht sprungartig, sondern z. B. mit einem PT₁-Verhalten.

Bei der Reduzierung des Solldruckwertes pₛₒₗₗ ist insbesondere darauf zu achten, dass der Solldruck p₁ die Fahrervorgabe p_{F} erreicht, bevor die Fahrervorgabe p_{F} gleich Null ist. Andernfalls würde es zu einem "Kleben" der Bremse kommen, d.h. das Fahrzeug würde noch gebremst werden, ohne dass der Fahrer das Fuß-Bremspedal 7 betätigt. Dies ist natürlich nicht erwünscht.

Figur 3 zeigt den Regelverlauf einer ACC-Regelung für den Fall, dass der Fahrer das Fuß-Bremspedal 7 kürzer als eine vorgegebene Mindest-Zeitdauer Δt betätigt. Wie auch in Figur 2 bewegt sich der Solldruck pₛₒₗₗ zu Beginn der Regelung auf hohem Niveau und wird nach dem Erkennen einer Pedal-Betätigung auf einem konstanten Wert festgehalten. Der vom Fahrer erzeugte Bremsdruck steigt zunächst kurz an und fällt danach wieder gegen Null. Die gesamte Dauer der Pedal-Betätigung ist dabei kürzer als die Mindest-Zeitdauer Δt. In diesem Fall wird der negative Gradient der Fahrervorgabe ignoriert und der Solldruck pₛₒₗₗ weiterhin auf dem konstanten Wert gehalten. Die Regelung wird danach so lange aufrechterhalten, bis das Fahrzeug zum Stillstand gekommen ist.

Durch die Vorgabe einer Mindest-Zeitdauer Δt für die Pedal-Betätigung kann insbesondere verhindert werden, dass die Bremsregelung ungewollt unterbrochen wird, wenn der Fahrer das Bremspedal 7 nur leicht antippt oder ungewollt berührt.

## Patentansprüche

1. Verfahren zum automatischen Bremsen eines Fahrzeuges, bei dem das Umfeld des Fahrzeuges sensorisch überwacht und bei Erkennen einer Gefahrensituation eine automatische Bremsregelung durchgeführt wird, bei dem, nachdem der Fahrer die Betriebsbremse (7) betätigt hat, ein Regelvorgang basierend auf einem festen Sollwert (pₛₒₗₗ) durchgeführt wird und die Regelung so lange fortgeführt wird, bis der Fahrer seinen Bremswunsch (p_{F}) reduziert,
**dadurch gekennzeichnet, dass** der Sollwert (pₛₒₗₗ) so schnell reduziert wird, dass er die Fahrervorgabe (p_{F}) erreicht hat, noch bevor die Fahrervorgabe (p_{F}) gleich Null ist.

2. Verfahren nach Anspruch 1, **dadurch gekennzeichnet, dass** der Regler-Sollwert (pₛₒₗₗ) auf die Fahrervorgabe (p_{F}) reduziert wird, sobald der Fahrer die Betriebsbremse (7) löst.

3. Verfahren nach Anspruch 2, **dadurch gekennzeichnet, dass** der Sollwert (pₛₒₗₗ) gemäß einer vorgegebenen Übergangs-Funktion auf die Fahrervorgabe (p_{F}) reduziert wird.

4. Verfahren nach Anspruch 2 oder 3, **dadurch gekennzeichnet, dass** der Sollwert (pₛₒₗₗ) mit einem PT₁-Verhalten auf die Fahrervorgabe (p_{F}) reduziert wird.

5. Verfahren nach einem der vorhergehenden Ansprüche, **dadurch gekennzeichnet, dass** der Sollwert (pₛₒₗₗ) nicht reduziert wird, wenn die Dauer der Bremsbetätigung durch den Fahrer kürzer ist, als ein vorgegebener Schwellenwert (Δt).

6. Verfahren nach einem der vorhergehenden Ansprüche, **dadurch gekennzeichnet, dass** der Bremsdruck (p) oder eine andere, die Fahrzeugverzögerung bestimmende Größe geregelt wird.

7. Verfahren nach einem der vorhergehenden Ansprüche, **dadurch gekennzeichnet, dass** die Regelung deaktiviert wird, wenn die Fahrervorgabe (p_{F}) größer ist als der Regler-Sollwert (pₛₒₗₗ).

8. Steuergerät mit einer Bremsassistenz-Funktion (8) zum automatischen Bremsen eines Fahrzeuges im Falle einer Fahrsituation, in der sich das Fahrzeug einem Hindernis nähert, wobei die Bremsassistenz-Funktion (8) so ausgelegt ist, dass sie einen festen Sollwert (pₛₒₗₗ) für einen Regler (2) erzeugt, wenn der Fahrer die Betriebsbremse (7) betätigt, und den Sollwert (pₛₒₗₗ) reduziert, wenn der Fahrer die Betriebsbremse (7) löst,
**dadurch gekennzeichnet, dass** der Sollwert (pₛₒₗₗ) so schnell reduziert wird, dass er die Fahrervorgabe (p_{F}) erreicht hat, noch bevor die Fahrervorgabe (p_{F}) gleich Null ist.

## Claims

1. Method for automatically braking a vehicle, in which the surroundings of the vehicle are monitored by sensor, and an automatic braking control process is carried out when a hazardous situation is detected, in which method a control process is carried out on the basis of a fixed setpoint value (pₛₑₜₚ) after the driver has actuated the service brake (7), and the control is carried out until the driver reduces his braking request (p_{F}),
**characterized in that** the setpoint value (pₛₑₜₚ) is reduced so quickly that it has reached the driver's preset value (p_{F}) before the driver's preset value (p_{F}) is equal to zero.

2. Method according to Claim 1, **characterized in that** the controller setpoint value (pₛₑₜₚ) is reduced to the driver's preset value (p_{F}) as soon as the driver releases the service brake (7).

3. Method according to Claim 2, **characterized in that** the setpoint value (pₛₑₜₚ) is reduced to the driver's preset value (p_{F}) in accordance with a predefined transition function.

4. Method according to Claim 2 or 3, **characterized in that** the setpoint value (pₛₑₜₚ) is reduced to the driver's preset value (p_{F}) with a PT₁ behaviour.

5. Method according to one of the preceding claims, **characterized in that** the setpoint value (pₛₑₜₚ) is not reduced if the duration of the activation of the brakes by the driver is shorter than a predefined threshold value (Δt).

6. Method according to one of the preceding claims, **characterized in that** the brake pressure (p), or another variable which determines the deceleration of the vehicle, is adjusted.

7. Method according to one of the preceding claims, **characterized in that** the control is deactivated if the driver's preset value (p_{F}) is larger than the controller setpoint value (pₛₑₜₚ).

8. Control unit having a braking assistance function (8) for automatically braking a vehicle in the case of a hazardous situation in which the vehicle approaches an obstacle, wherein the braking assistance function (8) is configured in such a way that it generates a fixed setpoint value (pₛₑₜₚ) for a controller (2) if the driver actuates the service brake (7) and reduces the setpoint value (pₛₑₜₚ) when the driver releases the service brake (7),
**characterized in that** the setpoint value (pₛₑₜₚ) is reduced so quickly that it has reached the driver's preset value (p_{F}) before the driver's preset value (p_{F}) is equal to zero.

## Revendications

1. Procédé pour le freinage automatique d'un véhicule, dans lequel l'environnement du véhicule est contrôlé par des capteurs, et à la détection d'une situation de danger, une régulation de freinage automatique est réalisée, dans lequel, après que le conducteur a actionné le frein de service (7), une opération de régulation basée sur une valeur de consigne établie (pₛₒₗₗ) est réalisée et la régulation est poursuivie jusqu'à ce que le conducteur réduise son souhait de freinage (p_{F}), **caractérisé en ce que** la valeur de consigne (pₛₒₗₗ) est réduite si rapidement qu'elle atteint la valeur prédéfinie par le conducteur (p_{F}) avant que la valeur prédéfinie par le conducteur (p_{F}) ne soit égale à zéro.

2. Procédé selon la revendication 1, **caractérisé en ce que** la valeur de consigne établie (pₛₒₗₗ) est réduite à la valeur prédéfinie par le conducteur (p_{F}), dès que le conducteur relâche le frein de service (7).

3. Procédé selon la revendication 2, **caractérisé en ce que** la valeur de consigne (pₛₒₗₗ) est réduite à la valeur prédéfinie par le conducteur (p_{F}) en fonction d'une fonction de transfert prédéfinie.

4. Procédé selon la revendication 2 ou 3, **caractérisé en ce que** la valeur de consigne (pₛₒₗₗ) est réduite à la valeur prédéfinie par le conducteur (p_{F}) avec une allure PT₁.

5. Procédé selon l'une quelconque des revendications précédentes, **caractérisé en ce que** la valeur de consigne (pₛₒₗₗ) n'est pas réduite lorsque la durée de l'actionnement des freins par le conducteur est plus courte qu'une valeur seuil prédéfinie (Δt).

6. Procédé selon l'une quelconque des revendications précédentes, **caractérisé en ce que** la pression de freinage (p), ou une autre grandeur déterminant le ralentissement du véhicule, est régulée.

7. Procédé selon l'une quelconque des revendications précédentes, **caractérisé en ce que** la régulation est désactivée lorsque la valeur prédéfinie par le conducteur (p_{F}) est supérieure à la valeur de consigne de réglage (pₛₒₗₗ).

8. Appareil de commande comprenant une fonction d'assistance au freinage (8) pour le freinage automatique d'un véhicule dans le cas d'une situation de conduite dans laquelle le véhicule se rapproche d'un obstacle,
la fonction d'assistance au freinage (8) étant conçue de telle sorte qu'elle produise une valeur de consigne établie (pₛₒₗₗ) pour un régulateur (2) lorsque le conducteur actionne le frein de service (7), et réduise la valeur de consigne (pₛₒₗₗ) lorsque le conducteur relâche le frein de service (7),
**caractérisé en ce que** la valeur de consigne (pₛₒₗₗ) est réduite si rapidement qu'elle atteint la valeur prédéfinie par le conducteur (p_{F}) avant que la valeur prédéfinie par le conducteur (p_{F}) ne soit égale à zéro.
